# EUROPÄISCHE PATENTSCHRIFT

(11) **EP 0 649 821 B1**
(45) Veröffentlichungstag und Bekanntmachung des Hinweises auf die Patenterteilung: **05.08.1998**
(21) Anmeldenummer: 94116647.2
(22) Anmeldetag: 21.10.1994
(51) Int. Cl.: C03B 27/044, C03B 25/08, F26B 13/02, F27B 9/36, F27B 9/10

(54) **Vorrichtung zum Erhitzen oder zum Kühlen von tafelförmigem oder bandförmigem Flachglas**
Apparatus for heating or cooling of flat glass sheets or strips
Dispositif pour l'échauffement ou le refroidissement de feuilles ou de rubans de verre

(30) Priorität: 25.10.1993 DE 4336364
(43) Veröffentlichungstag der Anmeldung: 26.04.1995
(73) Patentinhaber: Cattin Machines S.A., CH-2301 La Chaux-de Fonds (CH)
(72) Erfinder: Thiessen, Volker, Dr. Ing., D-52062 Aachen (DE)
(74) Vertreter: Kohlmann, Karl Friedrich, Dipl.-Ing.

(56) Entgegenhaltungen:
- EP-A- 0 282 947
- DE-A- 2 016 488
- DE-C- 4 010 280

## Beschreibung

Die Erfindung betrifft eine Vorrichtung zum Erhitzen oder zum Kühlen von tafelförmigem oder bandförmigem Flachglas, bei der das Glas beidseitig mit einem Behandlungsgas beblasen wird, mit einer Behandlungszone für die annähernd in ihrer Ebene längs bewegte Glasfläche mit zu beiden Seiten der Glasfläche angeordnete und quer zur Bewegungsrichtung der Glasfläche verlaufenden Düsenrippen (5) für das Ausblasen des Behandlungsgases und mit mehreren Ventilatoren (6) zur Erzeugung des den Düsenrippen zugeführten Behandlungsgasstromes.

Eine Vorrichtung dieser Gattung, in der Ausführung als Hochkonvektionsofen zur Erwärmung von über Rollen geführten Glasscheiben, ist durch die DE-PS 40 10 280 bekannt. Diese Ausführung sieht für einen Einkammer-Ofen, bzw. eine Zone eines mehrzonigen Ofens, vier Radialgebläse in streng raumsymmetrischer Anordnung vor, um mittels einer streng symmetrischen Strömungsführung eine sehr gleichmässige Temperaturverteilung im Behandlungsgasstrom zu erreichen. Dieses Ziel wird jedoch durch einen sehr großen technischen Aufwand erkauft, nämlich vier Radial-Gebläse, je Einkammer-Ofen bzw. je Zone eines mehrzonigen Ofens, werden benötigt.

Wegen des relativ kleinen Einlauf-Querschnitts eines Radial-Ventilators wird hier das Behandlungsgas aus dem Innenraum des Behandlungsraumes relativ punktuell abgesaugt, was große Ungleichmäßigkeiten in der Abströmung aus dem Innenraum zur Folge hat, in soweit ist selbst bei diesem aufwendigen Konzept eine gleichmäßige Temperaturverteilung nicht streng gewährleistet.

Die nötigen großen Mengenströme an Behandlungsgas erfordern selbst bei vier Ventilatoren je Einkammer-Ofen, bzw. je Zone eines mehrzonigen Ofens, einen so großen Laufradaußendurchmesser des einzelnen Radial-Ventilators - daher mit dem Ventilatorgehäuse eine entsprechend große Bauhöhe des Ventilators - daß in vielen Fällen die gewünschte Arbeitshöhe von ca. 1200 mm nicht eingehalten werden kann, oder eben doch eine aufwendige Grube für den Öfen nötig ist.

Ferner ist die Strömungsführung des Behandlungsgases immer noch abgewinkelt - verbunden mit entsprechend hohem Druckverlust - weil beim Einströmen des Behandlungsgases in die Düsenrippen das Behandlungsgas um 90° umgelenkt werden muß.

Die Verwendung von Querstrom-Ventilatoren ist schon für mannigfache Anwendungen bekannt, auch zum Erhitzen von Luft. Jedoch sind offenbar etwaige Vorteile von Querstrom-Gebläsen beim Einbau in Konvektionserhitzer für Flachglas bisher übersehen worden. Anscheinend beruht dies auf Vorurteilen, z.B. wegen der für die Flachglas-Erhitzung nötigen hohen Heizgastemperaturen zwischen 600 und 700° C, denn bei solchen Temperaturen sind die für ein Querstrom-Gebläse besonders einschneidenden Fliehkraftbeanspruchungen der rotierenden Bauteile nur noch knapp zu beherrschen.

Ausgehend vom Stand der Technik gemäß der eingangs erörterten DE-PS 40 10 280 liegt der Erfindung die Aufgabe zugrunde, Nachteile dieser bekannten Bauart zu vermeiden und mit geringem technischen Aufwand einen mit gleichmäßiger Temperaturverteilung des Behandlungsgasstromes arbeitenden Konvektionserhitzer, bzw. -kühler für Flachglas zu verwirklichen.

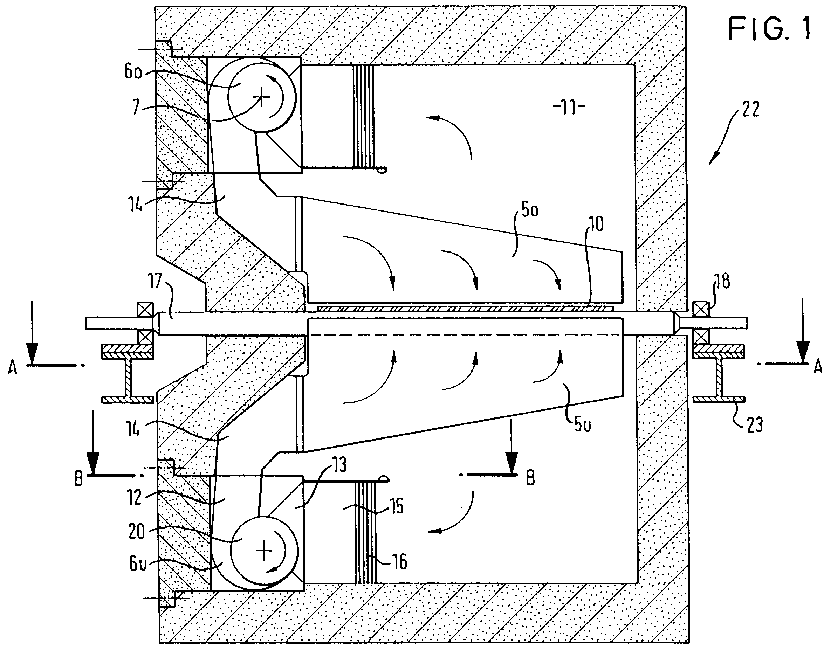

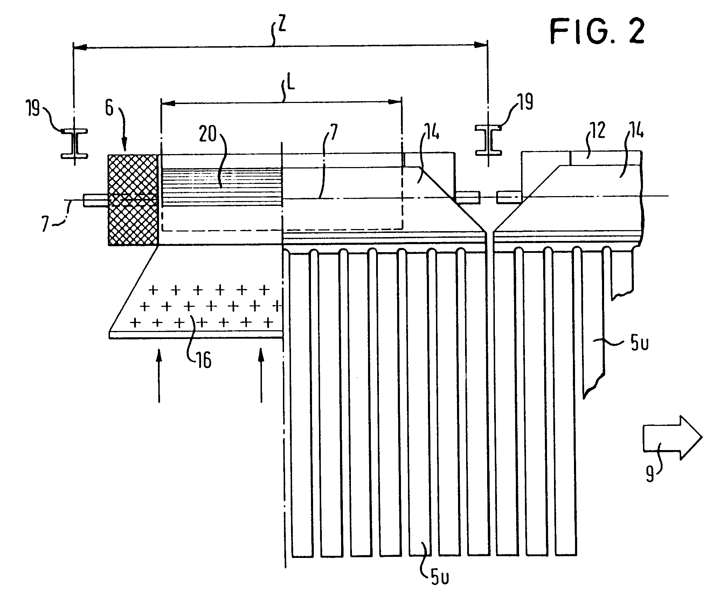

Diese Aufgabe wird bei gattungsgemäßen Vorrichtungen dadurch gelöst, daß als Ventilatoren je Behandlungszone mindestens zwei Querstrom-Ventilatoren vorgesehen sind, die in der Nähe (Fig. 1, 2) eines oder beider Längsränder der Behandlungszone und/oder nahe der Längsmittelachse (8) der Behandlungszone, mit der Ventilatorachse annähernd parallel zur Bewegungsrichtung der Glasfläche verlaufend, angeordnet sind.

### Vorteile der Erfindung:

Die vorgeschlagenen Querstrom-Ventilatoren eröffnen in ihrer besonders ausgewählten Achsanordnung und Bemessung die Möglichkeit, mit kleinem technischen Aufwand eine sehr gleichmäßige Temperaturverteilung im Behandlungsgas und somit im behandelten Flachglas zu erzielen und damit eine hohe Qualität der Flachglasveredelung zu erreichen.

Weitere Vorteile werden durch Merkmale der Unteransprüche erzielt.

Das Merkmal des Anspruches 2 erspart umständliche Gaskanalführungen zwischen den beiden Ofenhälften (obere und untere) und erlaubt durch leicht verschiedene Leistungseinregelung der Gebläse (6₀) und (6ᵤ) Unterschiede, die z.B. durch das Nicht-vorhanden-sein von Rollen in der oberen Hälfte auftreten, auszugleichen.

Zum Beispiel das Merkmal des Anspruches 3 ergibt eine im Vergleich zu Radial-Ventilatoren erheblich größere Laufradbreite des Querstrom-Ventilators, so daß ohne Schwierigkeit mit geringstem Platzbedarf die benötigten großen Mengenströme des Behandlungsgases erzeugt werden können, wobei meist der Laufraddurchmesser des Querstrom-Gebläses kleiner als bei entsprechenden Radial-Gebläsen gehalten werden kann, was sich auf die Bauhöhe der gesamten Vorrichtung als entscheidender Vorteil erweist. Auch ergibt sich ein sehr großer, über fast die ganze Länge (Z) der Behandlungszone erstreckender Einlaufquerschnitt für den Ventilator, und damit eine sehr gleichmäßige Absaugung aus dem Innenraum (11) der gesamten Behandlungszone, was erheblich zur gleichmäßigen Temperaturverteilung im Behandlungsgas und im behandelten Flachglas beiträgt. Dabei kann auch für große Arbeitslängen und Arbeitsbreiten einer Behandlungszone die erwünschte niedrige Arbeitshöhe von ca. 1200 mm ohne Grube eingehalten werden. Schließlich erlaubt der große Einlaufkanal-Querschnitt auch problemlos die Unterbringung von Heiz- oder Kühlregistern auf großem Querschnitt und mit geringer Tiefe, d.h. wiederum mit sehr niedrigem Strömungsdruckverlust. Mit einer über die Arbeitslänge variierenden Heizleistung können in besonders vorteilhafter Weise Unterschiede in der Temperaturverteilung des Behandlungsgases über die Lauflänge der Behandlungszone ausgeglichen oder gezielt hergestellt werden.

Mit den Merkmalen insbesondere des Anspruches 7 kann eine äußerst umlenkungsarme - damit druckverlustarme - Führung des Behandlungsgases erreicht werden.

Mit dem Merkmal des Anspruchs 12 kann eine besonders große Arbeitsbreite der Vorrichtung und mit dem des Anspruchs 14 eine besonders gute Temperaturvergleichmäßigung im Behandlungsgas, weil die Gaskreisläufe der gegenüberliegenden Ventilatoren ständig durchmischt werden, erzielt werden.

Die Erfindung wird im folgenden am Beispiel eines Konvektionsofens zum Erhitzen von über Rollen geführten Glasscheiben unter Bezugnahme auf die schematisch gehaltenen Zeichnungsfiguren weiter erläutert.

Es zeigen:
- Fig. 1: einen schematischen vertikalen Querschnitt durch den Konvektionsofen;
- Fig. 2: einen gestuften Horizontalschnitt des Konvektionsofens, aus dem eine Behandlungszone (Länge Z) ganz hervorgeht und eine benachbarte Behandlungszone zu einem kleinen Teil dargestellt ist;
- Fig. 3: einen zu Fig. 2 analogen, nicht gestuften Schnitt durch eine Vorrichtung mit besonders großer Arbeitsbreite;
- Fig. 4: einen analogen, nicht gestuften Schnitt mit der halben Arbeitsbreite der Fig. 4 und,
- Fig. 5: einen vergrößerten Längsschnitt, z. B. entlang der Längsmittellinie 8 der Fig. 3 mit Rollen zur Führung der Glasscheiben oder eines kontinuierlichen Flachglas-Bandes.

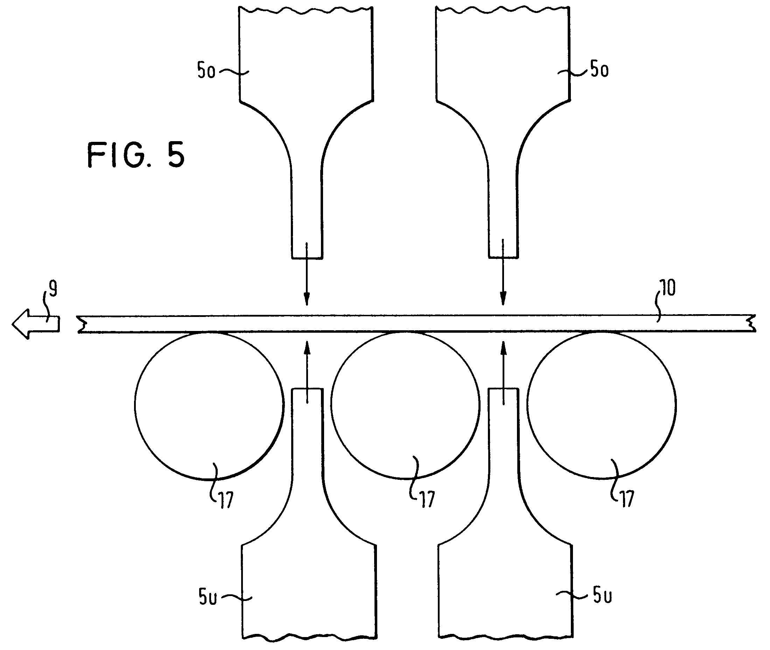

Die in den Fig. 1 bis 5 dargestellten Konvektionserwärmungsanlagen für Glasscheiben 10 (siehe Fig. 5) ist allgemein duch das Bezugszeichen 22 angedeutet und weist einen geschlossenen Behandlungsraum 11 auf, der bei der dargestellten Ausführungsform im vertikalen Schnitt einen rechteckigen Querschnitt hat, d.h., die stark wärmegedämmten Wände des Behandlungsraums 11 bilden einen im Querschnitt rechteckigen Kasten.

Die Glasscheiben 10 liegen auf angetriebenen Rollen 17 und werden von den Rollen 17 durch die Konvektionserwärmungsanlage 22 transportiert. Um unzulässige Verformungen der aufgrund der Erwärmung erweichten Glasscheiben 10 zu vermeiden, müssen die Rollen 17 entsprechend eng geteilt sein, also nur einen geringen Abstand voneinander haben, wie man beispielsweise aus Fig. 5 erkennt.

Die relativ große Arbeitsbreite solcher Glasscheiben 10 bedingt außerdem einen relativ großen Durchmesser der Rollen 17. Üblich sind bei Verwendung keramischer Rollen Rollendurchmesser, die etwa 1/35 der freien, ungestützten Rollenspannweite betragen. Für die üblichen Abmessungen der zu behandelnden Glasscheiben 10 ist dies etwa maßstabsgerecht aus Fig. 5 ersichtlich.

Ein erwärmter Behandlungsgasstrom, insbesondere Luft, wird durch Düsenrippen 5 von unten (Düsenrippen 5ᵤ) bzw. von oben (Düsenrippen 5ₒ) auf die Glasscheiben 10 geblasen, wobei sich die unteren Düsenrippen 5ᵤ zwischen den Rollen 17 befinden, d.h., die Rollen 17 und die Düsenrippen 5ᵤ wechseln einander ab, wie man insbesondere aus Fig. 5 erkennt.

Oberhalb der Glasscheiben 10 sind die oberen Düsenrippen 5ₒ gegenüber den unteren Düsenrippen 5ᵤ angeordnet, wie ebenfalls aus Fig. 5 ersichtlich ist.

Wie aus dem Querschnitt nach Fig. 1 ersichtlich ist, erstrecken sich die Düsenrippen 5 über die gesamte Innenbreite der Konvektionserwärmungsanlage bzw. des Behandlungsraumes 11, während die Rollen 17 (siehe Fig. 1) seitlich aus dem Behandlungsraum 11 herausragen und damit außerhalb des Behandlungsraumes 11 gelagert bzw. angetrieben werden. Die Lagerung ist mit dem Bezugszeichen 18 angedeutet, auf die Darstellung des Antriebes der Rollen wurde verzichtet.

Dies bedeutet, daß sich die Rollenlänge nach der geforderten Arbeitsbreite, nach dem im wesentlichen von der Temperatur im Behandlungsraum 11 abhängigen Aufbau seiner Wand und nach den Anforderungen durch die Lagerung und den Rollenantrieb richtet. Die Lagerung der Rollen 17 erfolgt in bekannter Weise außerhalb des Behandlungsraumes 11, vorzugsweise auf einem besonderen Lagerungsgestell, dessen Ständer 19 in Fig. 2 angedeutet sind.

Aus den Fig. 1 bis 4 sind Ausblasstutzen 14 ersichtlich, die die Düsenrippen 5 von der Seite her beschicken und sich dementsprechend an einer Wand des Behandlungsraums 11 befinden. Die Düsenrippen 5 verjüngen sich von der Beschickungsseite zu ihrem Ende hin, wie man aus Fig. 1 erkennt. Eine Ansicht der Ausblaskanäle 5 mit vorgeschalteten Ausblaskanälen 14 zeigt Fig. 1. Durch die Verringerung des Strömungsquerschnittes der Düsenrippen in Strömungsrichtung wird erreicht, daß in diesen trotz abnehmendem Volumenstrom die Strömungsgeschwindigkeit annähernd konstant bleibt.

Bei der in den Figuren dargestellten Konvektionserwärmungsanlage für Glasscheiben dienen als Strömungsantrieb zwei Querstrom-Ventilatoren, wobei der eine 6ₒ von ihnen den Oberteil des Konvektionsofens, d.h., die dazugehörigen Düsenrippen 5ₒ versorgt und der andere 6ᵤ den Unterteil des Konvektionsofens mit den zugehörigen Düsenrippen 5ᵤ.

Kleine Öfen bestehen aus einer einzigen Behandlungszone (Einkammer-Ofen) und die Laufradbreite der beiden Querstrom-Ventilatoren (Fig. 1) erstreckt sich erfindungsgemäß fast über die ganze Länge (in Bewegungsrichtung der Glasflächen) der Behandlungszone.

Es können aber beliebig viele solche Behandlungszonen in der Längserstreckung hintereinander angeordnet werden, in einem gemeinsamen geschlossenen oder offenen Ofen- bzw. Behandlungsraum, wie das in Fig. 2 durch die Anfügung einer benachbarten Behandlungszone, die wieder einen oder mehrere Querstrom-Ventilatoren aufweist, angedeutet ist. Die Rollenfläche, entsprechend den Grundrissen Fig. 2, 3 und 4, kann gleichzeitig mit einer Vielzahl gleicher oder kleinerer und größerer Flachglasteile belegt sein.

Der Aufbau der Querstromgebläse wird als bekannt vorausgesetzt. Jedoch weisen die hier verwendeten Spezialausführungen oft mehr Versteifungsringe an den Laufschaufeln auf als normal, um der besonders hohen Temperaturbeanspruchung gewachsen zu sein.

In besonders vorteilhafter Weiterbildung der Anordnung gemäß Anspruch 7 kann erfindungsgemäß auch das Querstromgebläse leicht angekippt angeordnet werden, so daß z.B. beim Gebläse 6ᵤ (Fig. 1) die Stirnfläche des Ansaugstutzens 13 zum Behandlungsraum 11 hingeneigt ist und entsprechend die Stirnfläche des Ausblasstutzens 12 zum Behandlungsraum 11 hin Gefälle aufweist, hierdurch werden die Umlenkverluste im Ausblaskanal 14 kleiner.

Wie man insbesondere aus den Fig. 1 und 2 erkennt, ist für jede Einheit dieser Konvektionserwärmungsanlage über bzw. unter der Glasscheibe 10 ein Querstromventilator 6 vorgesehen, der sich an einer Wand des Behandlungsraumes 11 befindet und das Behandlungsgas über den Ausblaskanal 14 in die zugehörigen Düsenrippen 5 bläst. Dabei sind die Querstrom-Ventilatoren 6 jeder Behandlungszone weitgehend symmetrisch zu einer durch die Glasfläche 10 (Fig. 5) gebildeten Symmetrieebene angeordnet, wie man aus Fig. 1 erkennt. In der nächsten Einheit kann diese Anordnung auch umgekehrt erfolgen, d.h., die Gebläse können auf Fig. 1 bezogen statt links auf der rechten Seite der Behandlungszone liegen.

Zum Einbau einer Beheizungseinrichtung oder beim Betrieb einer entsprechenden Konvektionsanlage als Kühlzone einer Kühleinrichtung steht der gesamte Innenraum 11 des Behandlungsraums 11 unterhalb oder oberhalb der Düsenrippen 5 zur Verfügung. Bevorzugt werden die Heiz- oder Kühlregister auch in einem Ansaugkanal 15 für das betreffende Gebläse angeordnet, dessen Formgebung dazu benutzt wird, die Strömungsverhältnisse im Innenraum 11, insbesondere an den Glasflächen, in gewünschter Weise zu beeinflussen. So ergibt sich eine sehr gleichmäßige Temperaturverteilung im Gasstrom.

Aufgrund einer Beschickung der Düsenrippen 5 einer Behandlungszone von der einen und in der nächsten Behandlungszone von der gegenüberliegenden Seite (anders als nach Fig. 2) werden Unterschiede ausgeglichen, die sich beispielsweise durch Temperaturänderungen des Gasstromes beim Durchströmen der Düsenrippen 5 ergeben. Würden nämlich die Düsenrippen 5 immer nur von der gleichen Seite der Konvektionserwärmungsanlage 22 her beschickt, so könnte sich aufgrund dieses Störeinflusses ein keilförmiges Temperaturprofil in der Materialbahn nicht immer ausschließen lassen.

Es hat sich als zweckmäßig herausgestellt, wenn jeder Querstromläufer 20 die gleiche Anzahl von Düsenrippen 5 versorgt, die in ihren Hauptabmessungen gleich sind, um auch auf diese Weise zur gleichmäßigen Strömungsbeaufschlagung beizutragen.

Mit 23 und 19 ist die Aufständerung der Lager 18 für die Rollen 17 angedeutet; auf die Angabe des Rollenantriebes wurde verzichtet.

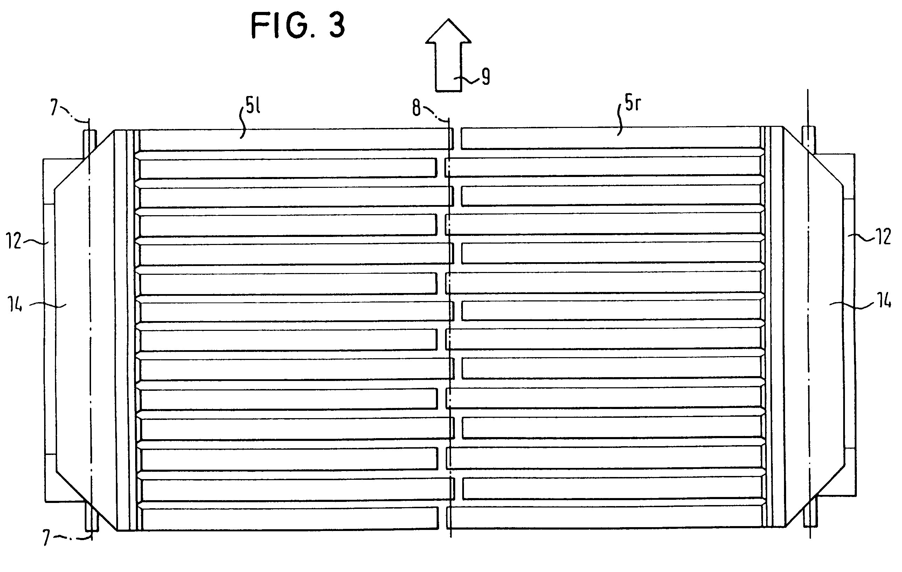

Fig. 3 zeigt, wie gemäß der Erfindung in besonders einfacher Weise auch eine sehr große Arbeitsbreite verwirklicht werden kann. Hier sind je Behandlungszone vier Querstrom-Ventilatoren vorgesehen. Die gezeigte wechselweise Versetzung der Düsenrippenenden dient der Vergleichmäßigung der Glastemperatur in diesem kritischen Bereich.

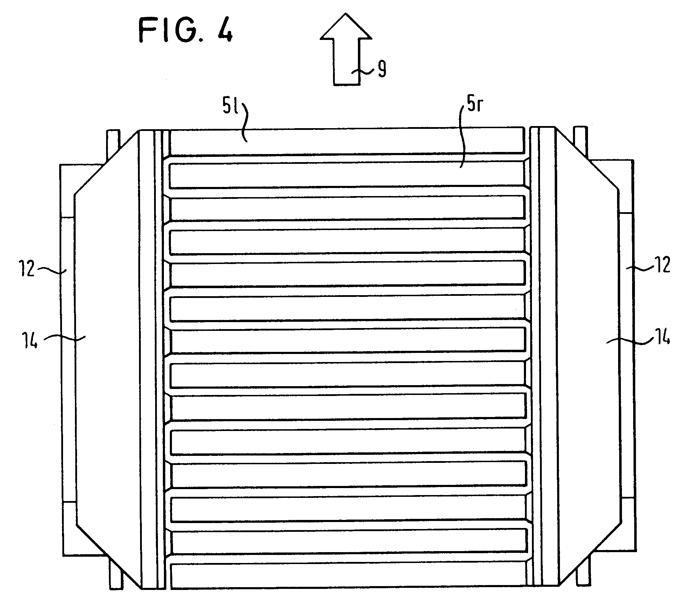

Mit der verzahnten Anordnung der Düsenrippen nach Fig. 4 kann eine besonders gute Arbeitsgasdurchmischung erzielt werden.

Fig. 5 veranschaulicht die Erfindung in Verbindung mit Rollen zur Führung des Flachglases. Auch wird für die Glasunterseite eine Lösung gezeigt, bei der kein direkter Infrarotstrahl vom Heizregister zur Glasfläche 10 gelangen kann. Nicht gezeigt wird, wie dies oberhalb der Glasfläche erfolgt, jedoch liegen auch derartige Lösungen im Rahmen der Erfindung.

## Patentansprüche

1. Vorrichtung zum Erhitzen oder zum Kühlen von tafelförmigem oder bandförmigem Flachglas, bei der das Glas beidseitig mit einem Behandlungsgas beblasen wird, mit mindestens einer Behandlungszone für die annähernd in ihrer Ebene längs bewegte Glasfläche, mit zu beiden Seiten der Glasfläche angeordneten und quer zur Bewegungsrichtung der Glasfläche verlaufenden Düsenrippen (5) für das Ausblasen des Behandlungsgases und mit mehreren Ventilatoren (6) zur Erzeugung des den Düsenrippen zugeführten Behandlungsgasstromes, dadurch gekennzeichnet, daß als Ventilatoren (6) je Behandlungszone mindestens zwei Querstrom-Ventilatoren vorgesehen sind, die in der Nähe (Fig. 1, 2) eines oder beider Längsränder der Behandlungszone und/oder nahe der Längsmittelachse (8) der Behandlungszone, mit der Ventilatorachse (7) annähernd parallel zur Bewegungsrichtung (9) der Glasfläche (10, Fig. 5) verlaufend, angeordnet sind.

2. Vorrichtung nach Anspruch 1, dadurch gekennzeichnet, daß je Behandlungszone ein Querstrom-Ventilator (6 o) für die eine Seite des Flachglases und ein Querstrom-Ventilator (6 u) für die andere Seite des Flachglases vorgesehen ist (Fig. 1).

3. Vorrichtung nach Anspruch 1 oder 2, dadurch gekennzeichnet, daß die Laufradbreite (L) jedes Querstrom-Ventilators (6) den größten Teil der Länge (Z) einer Behandlungszone einnimmt (Fig. 2, 3, 4).

4. Vorrichtung nach mindestens einem der vorhergehenden Ansprüche, dadurch gekennzeichnet, daß die Bewegungsrichtung (9) der Glasfläche horizontal oder annähernd horizontal ist.

5. Vorrichtung nach mindestens einem der vorhergehenden Ansprüche, dadurch gekennzeichnet, daß die Behandlungszone oder eine Aneinanderreihung solcher Zonen als geschlossener Behandlungsraum (11) ausgebildet ist (Fig. 1).

6. Vorrichtung nach Anspruch 5, dadurch gekennzeichnet, daß ein geschlossener Behandlungsgaskreislauf vorgesehen ist.

7. Vorrichtung nach Anspruch 1 oder einem der folgenden Ansprüche, dadurch gekennzeichnet, daß die Querstrom-Ventilatoren (6) derart orientiert sind, daß ihr Ausblasestutzen (12) im wesentlichen zur Glasfläche (10) hin und ihr Ansaugstutzen (13) annähernd senkrecht dazu in den Behandlungsraum (11) gerichtet ist.

8. Vorrichtung nach Anspruch 7, dadurch gekennzeichnet, daß ein diffusorförmig sich erweiternder Ausblaskanal (14) den Ausblasestutzen (12) mit den Düsenrippen (5) verbindet.

9. Vorrichtung nach Anspruch 1 oder einem der folgenden Ansprüche, dadurch gekennzeichnet, daß dem Ansaugstutzen (13) des Querstrom-Ventilators (6) ein Ansaugkanal (15) vorgeschaltet ist, in welchem ein Heiz- oder Kühlregister (16) angeordnet ist.

10. Vorrichtung nach Anspruch 1 oder einem der folgenden Ansprüche, dadurch gekennzeichnet, daß Rollen (17), vorzugsweise angetriebene, zum Führen der Glasfläche(n) (10) vorgesehen sind. (Fig. 5).

11. Vorrichtung nach Anspruch 1 oder einem der folgenden Ansprüche, dadurch gekennzeichnet, daß innerhalb einer Behandlungszone, bzw. einer Einkammer-Vorrichtung an beiden Längskanten der Behandlungszone (11) Querstromventilatoren (6) samt Ausblaskanälen (14) mit zugehörigen Düsenrippen (51, 5r) vorgesehen sind (Fig. 3, 4).

12. Vorrichtung nach Anspruch 11, dadurch gekennzeichnet, daß von gegenüberliegenden (Fig. 3) Ausblaskanälen (14) ausgehende Düsenrippen (5) paarig miteinander fluchten und in der Nähe der Längsmittelachse (4) der Vorrichtung enden (Fig. 3).

13. Vorrichtung nach Anspruch 11, dadurch gekennzeichnet, daß die Düsenrippen (5) einander gegenüberliegender Ausblaskanäle (14) ineinander verzahnt angeordnet sind und am jeweils gegenüberliegenden Längsrand des Behandlungsbereiches enden (Fig. 4).

14. Vorrichtung nach Anspruch 10 bezogen auf Anspruch 1 oder einen der folgenden Ansprüche, mindestens nach, dadurch gekennzeichnet, daß die Düsenrippen (5) in Verbindung mit den jeweiligen Abständen und Durchmessern der Rollen (17) sowie der düsenrippenseitigen Wand des Ansaugkanals (15) so gestaltet und bemessen sind, daß zwischen Heiz- oder Kühlregistern (16) und der Glasfläche (10) kein direkter Strahlungsaustausch stattfinden kann (Fig. 5 untere Hälfte).

15. Vorrichtung nach Anspruch 1 oder einem der folgenden Ansprüche, dadurch gekennzeichnet, daß die Düsenrippen (5) mit Schlitzdüsen, vorzugsweise einem einzigen durchgehenden Schlitz, versehen sind.

16. Vorrichtung nach Anspruch 1 oder einem der folgenden Ansprüche, gekennzeichnet durch die Verwendung für keramisches Behandlungsgut.

## Claims

1. Device for heating or for cooling plate-shaped or strip-shaped flat glass in which the glass is jet-blown on both sides with a treatment gas, having at least one treatment zone for the glass surface moved along approximately in its plane, having nozzle ribs (5) for blowing out the treatment gas arranged on both sides of the glass surface and extending transversely with respect to the direction of motion of the glass surface and having a plurality of fans (6) for producing the stream of treatment gas fed to the nozzle ribs, characterised in that for the fans (6) per each treatment zone at least two cross-flow fans are provided which are arranged in the vicinity (Figs 1, 2) of one or both longitudinal edges of the treatment zone and/or close to the central longitudinal axis (8) of the treatment zone with the fan axis (7) extending approximately parallel to the direction of motion (9) of the glass surface (10, Fig 5).

2. Device according to Claim 1, characterised in that for each treatment zone a cross-flow fan (6 o) is provided for one side of the flat glass and a cross-flow fan (6 u) is provided for the other side of the flat glass (Fig 1).

3. Device according to Claim 1 or 2, characterised in that the width (L) of each cross-flow fan (6) occupies the greatest part of the length (Z) of a treatment zone (Figs 2, 3, 4).

4. Device according to at least one of the preceding claims characterised in that the direction of motion (9) of the glass surface is horizontal or approximately horizontal.

5. Device according to at least one of the preceding claims, characterised in that the treatment zone or an adjoining of such zones is constructed as a closed treatment space (11, Fig 1).

6. Device according to Claim 5, characterised in that a closed treatment gas circuit is provided.

7. Device according to Claim 1 or one of the following claims, characterised in that the cross-flow fans (6) are oriented in such a way that their blowout connecting piece (12) is directed substantially towards the glass surface (10) and their intake connecting piece (13) is directed approximately perpendicularly thereto into the treatment space (11).

8. Device according to Claim 7, characterised in that a diffuser-shaped, widening blowout channel (14) links the blowout connecting piece (12) to the nozzle ribs (5).

9. Device according to Claim 1 or one of the following claims, characterised in that connected ahead of the intake connecting piece (13) of the cross-flow fan (6) is an intake channel (15) in which a heating or cooling element (16) is arranged.

10. Device according to Claim 1 or one of the following claims, characterised in that rollers (17), preferably driven ones, are provided for guiding the glass surface(s) (10) (Fig 5).

11. Device according to Claim 1 or one of the following claims, characterised in that inside a treatment zone or a single-chamber device, cross-flow fans (6) together with blowout channels (14) with associated nozzle ribs (5l, 5r) are provided at both longitudinal edges of the treatment zone (11) (Figs 3, 4).

12. Device according to Claim 11, characterised in that nozzle ribs (5) proceeding from opposite (Fig 3) blowout channels (14) are aligned in pairs with one another and terminate in the vicinity of the central longitudinal axis (4) of the device (Fig 3).

13. Device according to Claim 11, characterised in that the nozzle ribs (5) of blowout channels (14) situated opposite one another are arranged interleaved with one another and terminate at the respective opposite longitudinal edge of the treatment region (Fig 4).

14. Device according to Claim 10 with reference to Claim 1 or one of the following claims, characterised in that the nozzle ribs (5) in association with the respective spacings and diameters of the rollers (17) as well as the wall on the nozzle rib side of the intake channel (15) are designed in such a way and are of such a size that no direct radiation exchange can take place between the heating or cooling elements (16) and the glass surface (10) (lower half of Fig 5).

15. Device according to Claim 1 or one of the following claims, characterised in that the nozzle ribs (5) are provided with slit nozzles, preferably one single continuous slit.

16. Device according to Claim 1 or one of the following claims, characterised by the use for ceramic goods to be treated.

## Revendications

1. Dispositif pour chauffer ou refroidir du verre plat sous forme de plaque ou de bande, dans lequel un gaz de traitement est soufflé des deux côtés du verre, le dispositif comprenant au moins une zone de traitement pour la surface du verre déplacée longitudinalement approximativement dans son plan, comprenant également des nervures de buses (5) disposées des deux côtés de la surface de verre, s'étendant transversalement à la direction de mouvement de la surface de verre, et destinées au soufflage du gaz de traitement, le dispositif comprenant également plusieurs ventilateurs (6) destinés à engendrer le courant de gaz de traitement alimentant les nervures de buses, **caractérisé** en ce qu'en guise de ventilateurs (6) sont prévus pour chaque zone de traitement, au moins deux ventilateurs à courant transversal, qui sont disposés à proximité (figures 1, 2) d'un ou des deux bords longitudinaux de la zone de traitement et/ou à proximité de l'axe longitudinal central (8) de la zone de traitement, l'axe de ventilateur (7) s'étendant approximativement parallèlement à la direction de mouvement (9) de la surface de verre (10, figure 5).

2. Dispositif selon la revendication 1, **caractérisé** en ce qu'il est prévu pour chaque zone de traitement un ventilateur à courant transversal (6 o) pour l'un des côtés du verre plat et un ventilateur à courant transversal (6 u) pour l'autre côté du verre plat (figure 1).

3. Dispositif selon la revendication 1 ou 2, **caractérisé** en ce que la largeur de rotor (L) de chaque ventilateur à courant transversal (6) couvre la plus grande partie de la longueur (Z) d'une zone de traitement (figures 2, 3, 4).

4. Dispositif selon l'une au moins des revendications précédentes, **caractérisé** en ce que la direction de mouvement (9) de la surface de verre est horizontale ou approximativement horizontale.

5. Dispositif selon l'une au moins des revendications précédentes, **caractérisé** en ce que la zone de traitement ou une succession de telles zones, est réalisée sous forme de chambre de traitement (11) fermée (figure 1).

6. Dispositif selon la revendication 5, **caractérisé** en ce qu'il est prévu un circuit fermé de gaz de traitement.

7. Dispositif selon la revendication 1 ou l'une des revendications suivantes, **caractérisé** en ce que les ventilateurs à courant transversal (6) sont orientés de manière telle, que leur embout de sortie de soufflage (12) soit dirigé sensiblement en direction de la surface de verre (10) et leur embout d'aspiration (13) approximativement perpendiculairement au précédent, dans la chambre de traitement (11).

8. Dispositif selon la revendication 7, **caractérisé** en ce qu'un canal de soufflage (14) s'évasant en forme de diffuseur relie l'embout de sortie de soufflage (12) aux nervures de buses (5).

9. Dispositif selon la revendication 1 ou l'une des revendications suivantes, **caractérisé** en ce qu'en amont de l'embout d'aspiration (13) du ventilateur à courant transversal (6) est monté un canal d'aspiration (15) dans lequel est disposé un registre de chauffage ou de refroidissement (16).

10. Dispositif selon la revendication 1 ou l'une des revendications suivantes, **caractérisé** en ce que sont prévus des rouleaux (17), de préférence entraînés, pour le guidage de la ou des surfaces de verre (10) (figure 5).

11. Dispositif selon la revendication 1 ou l'une des revendications suivantes, **caractérisé** en ce qu'à l'intérieur d'une zone de traitement, ou d'un dispositif à une seule chambre, sont prévus sur les deux bords longitudinaux de la zone de traitement (11), des ventilateurs à courant transversal (6) y compris les canaux de soufflage (14) avec les nervures de buses (51, 5r) associées (figures 3, 4).

12. Dispositif selon la revendication 11, **caractérisé** en ce que les nervures de buses (5) issues de canaux de soufflage (14) opposés (figure 3), sont alignées par paires et se terminent à proximité de l'axe longitudinal central (4) du dispositif (figure 3).

13. Dispositif selon la revendication 11, **caractérisé** en ce que les nervures de buses (5) de canaux de soufflage (14) opposés, sont disposées de manière imbriquées les unes dans les autres et se terminent sur le bord longitudinal respectivement opposé de la zone de traitement (figure 4).

14. Dispositif selon la revendication 10 rattachée à la revendication 1 ou à l'une des revendications suivantes, **caractérisé** en ce que les nervures de buses (5), en relation avec les espacements et les diamètres des rouleaux (17) ainsi qu'avec la paroi du canal d'aspiration (15) située du côté des nervures de buses, sont configurées et dimensionnées de manière telle, qu'il ne puisse pas se produire d'échange de rayonnement direct entre les registres de chauffage ou de refroidissement (16) et la surface de verre (10) (figure 5, moitié inférieure).

15. Dispositif selon la revendication 1 ou l'une des revendications suivantes, **caractérisé** en ce que les nervures de buses (5) sont pourvues de fentes de buses, de préférence d'une seule fente de buse continue.

16. Dispositif selon la revendication 1 ou l'une des revendications suivantes, **caractérisé** par une utilisation pour des produits à traiter qui sont des produits céramiques.
